Europäisches Patentamt

European Patent Office

Office européen des brevets

(11) Publication number : **0 412 210 B1**

## (12) EUROPEAN PATENT SPECIFICATION

(45) Date of publication of patent specification :
**29.07.92 Bulletin 92/31**

(51) Int. Cl.$^5$ : **F02M 37/22, F02M 31/12**

(21) Application number : **89202747.5**

(22) Date of filing : **31.10.89**

(54) Decanter prefilter for diesel engine fuel.

(30) Priority : **21.07.89 IT 6761289**

(43) Date of publication of application :
**13.02.91 Bulletin 91/07**

(45) Publication of the grant of the patent :
**29.07.92 Bulletin 92/31**

(84) Designated Contracting States :
**AT BE CH DE ES FR GB GR LI LU NL SE**

(56) References cited :
**EP-A- 0 162 939**
**EP-A- 0 213 889**
**US-A- 4 406 785**

(73) Proprietor : **GILARDINI S.p.A.**
**Via Cuneo No. 20**
**I-10152 Turin (IT)**

(72) Inventor : **Drusi, Alberto**
**Via Perrone No. 4**
**I-10122 Turin (IT)**

(74) Representative : **Robba, Eugenio et al**
**Studio "INTERPATENT" via Caboto 35**
**I-10129 Turin (IT)**

## Description

The present invention relates to a decanter prefilter for Diesel engine fuel.

Diesel engine fuel may contain tar agglomerates of relatively large size which may cause rapid clogging of the filter. To avoid this drawback, above all in the feed line of truck Diesel engines, a prefiltering unit is arranged upstream of the main filter for the purpose of avoiding rapid clogging and improving the life of the filter. Typically prefiltering is designed to retain particles of a size up to 100-120 µ whereas normal filtering goes as far as retaining particles with a size of 5-10 µ.

EP-A-Ø 213 889 in the name of Davco discloses a prefilter for Diesel engine fuel comprising a bowl also containing a filter cartridge completely surrounded by a conical baffle to deflect the flow of incoming fuel: according to the preamble of claim 1. This embodiment, however, has the disadvantage of providing a costly baffle that completely sorrounds the filter cartridge, while the same effect could be obtained with the smaller and cheaper baffle of the present invention; another disadvantage is that the heating element is small and placed into the decantation chamber and therefore does not uniformly and completely heat the incoming fuel, but only the part of fuel that comes in contact with it.

It is the object of the present invention to provide an improved prefiltering unit for Diesel engine fuel, which is capable of associating prefiltering with decantation of the water that is usually contained in the fuel and, to heat the fuel to a temperature at which the formation of paraffin deposits is avoided, when this is required by outside temperature.

These and other objects and advantages of the invention, which will appear from the following description, are achieved by a prefilter for Diesel engine fuel, comprising a bowl closed by a cover in which fuel inlet holes and fuel outlet holes and sealing means are provided for fixing the bowl to a head arranged upstream of a fuel filter in the feed Line of a Diesel engine, said bowl being further provided with a drain hole with a removable plug, said bowl containing a filter cartridge in the form of a cylindrical crown, between said cartridge and the bottom of the bowl there being defined a fuel decantation chamber, wherein above said filter cartridge, a conical baffle is arranged for deflecting the flow of incoming fuel, and in said fuel decantation chamber an elastic support means is arranged for the assembly constituted by said filter cartridge and said baffle, said baffle being urged against said cover of the bowl in the portion between said fuel inlet holes and fuel outlet holes, characterized in that the baffle covers the filter cartridge without surrounding it and in that said head contains an electric heating device comprising a PTC polymer resistor in the form of a flat circular plate, a cup-shaped supporting element, also of conductive material, and an insulating element in contact with said head, providing a first fuel circulation chamber between said insulating element and the upper side of said resistor and a second fuel circulation chamber between said cup-shaped element and the lower side of said resistor, said electric heating device being mechanically and electrically connected to said head by screws, said insulating element and said polymer resistor and said cup-shaped supporting element being provided with diametrically opposed fuel passage holes, said screws being used to provide electrical connection between the heating plate and the ground via said head, whereas the supply of current to the plate is effected by a

Some embodiments of the invention will now be described by way of a non-limiting example with reference to the accompanying drawings, in which:

Fig. 1 is an axial sectional view of one embodiment of the prefilter according to the invention;

Fig. 2 is a top plan view of a detail of the embodiment shown in Fig. 1;

Fig. 3 is an exploded perspective view of some details of the embodiment of Fig. 1;

Fig. 4 is an axial sectional view of a detail of the embodiment of the prefilter according to the invention.

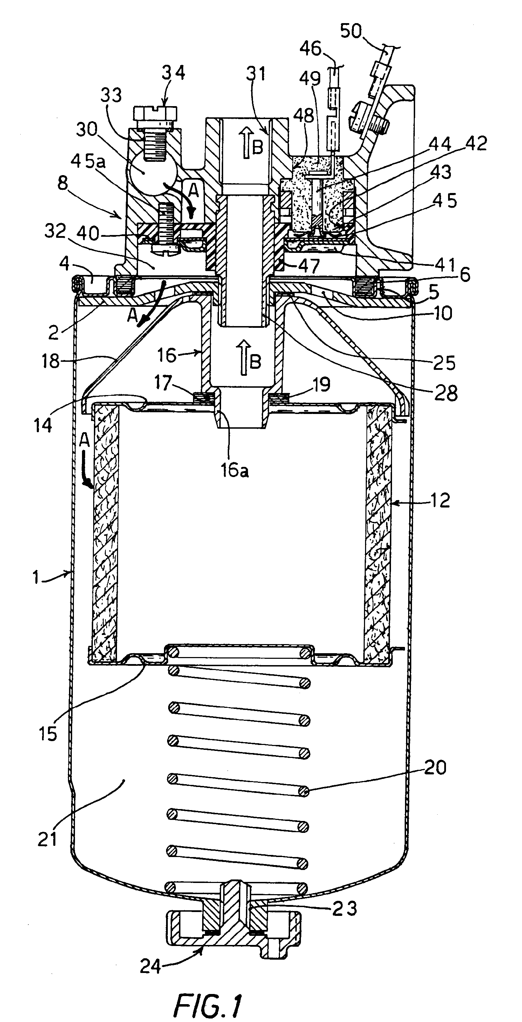

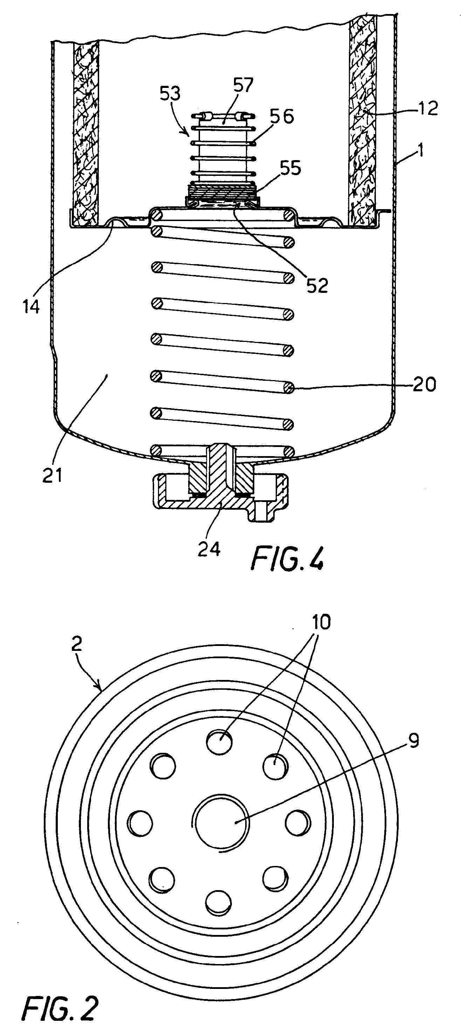

Referring to Figs. 1 and 2, indicated by 1 is a cylindrical bowl adapted to contain a fuel filter element and the other parts to be described hereinafter. The bowl is closed by a cover 2 above which a ring 4 is arranged and seam-welded to the bowl 1. The ring 4 is shaped with a circular groove 5 in which an O ring 6 is accommodated for sealing against a head generally indicated by 8, to which the prefilter is screwed. As shown by the plan view of Fig. 2, the cover 2 is provided with a central hole 9 for the exit of the filtered fuel and with a series of holes 10 for the inlet of the fuel to be filtered, the latter holes being arranged along a circumference at an intermediate radial distance between the centre of the cover and its periphery and all of them being left free by the ring 4 arranged above the cover.

Arranged in the bowl 1 is a filter element 12 with a cylindrical crown, which is constituted by pleated paper or an unwoven fabric or a polyester felt impregnated by a thermosetting resin, for example melamine resin, so as to impart sufficient stiffness to the element to be self-supporting and to calibrate the holes thereof so that their size will not exceed about 100-120 µ. The filter element 12 is mounted between two circular metal plates 14, 15 the first one of which is provided with a hole into which a sleeve 16 is inserted which forms part of a conical baffle 18 which is downwardly open and whose diameter is slightly greater than the diameter of the filter element 12. The end portion 16a of the sleeve 16, which is inserted in the central hole of the plate 14, has a reduced diameter so as to form a shoulder 17 as a seat for a gasket 19 for sealing against the plate 14 of the filter cartridge.

The assembly constituted by the filter cartridge 12 and the baffle 18 is supported by a helical spring 20 arranged between the base plate 15 of the cartridge 12 and the bottom of the bowl. The dimensions of the cartridge and the baffle are such that between the cartridge and the bottom of the bowl there will remain a chamber 21 for decantation of the fuel which is yet to be filtered. Provided at the bottom of the chamber is a drain hole 23 which is closed by a screw plug 24, for removal of the decanted portion.

The top of the conical baffle 18 urges against the cover 2 of the bowl through a gasket 25 arranged between the holes 10 and the central hole 9 of the cover 2 to ensure the separation of the inlet and outlet fuel flows into and from the bowl.

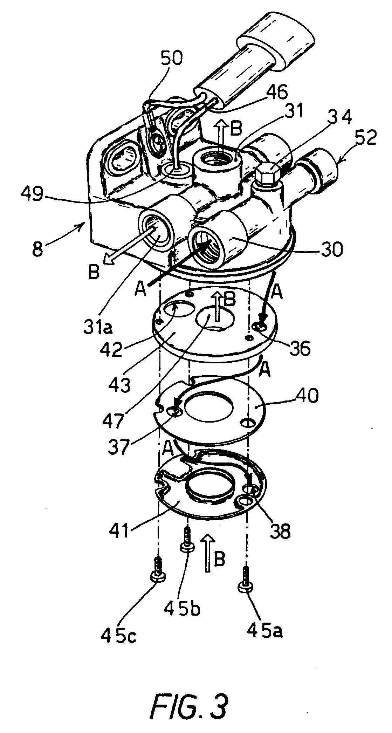

The aforementioned filter is fixed to a head 8, shown also in Fig. 3, through the threaded central hole 9 of the cover which is screwed on to a likewise threaded tube 28 extending from the head.

The head 8 is provided with an inlet duct 30 and outlet ducts 31 or 31a for the fuel in a known manner. The inlet duct 30 opens into an annular chamber 32 defined between the head 8 and the cover 2 of the bowl and faced by the holes 10 which permit the passage of the fuel to the interior of the bowl. Provided in the inlet duct 30 is an air bleed hole 33 which is closed by a screw 34.

Accommodated in the head 8 may be an electric fuel heating device which is useful in the cold season to prevent the formation of paraffin deposits on the filter and prevent the filter from being clogged thereby. Such a device is shown in cross section in Fig. 1 and in an exploded view in Fig. 3.

This device substantially consists of a circular plate 40 of conductive material, mounted between a lower cup-shaped plate 41, likewise of conductive material, and a disk 43 of insulating material which is in contact with the inner surface of the head 8 of the filter and is provided with a lower collar 47 on which the two plates 40, 41 are forcedly mounted. The three pieces 40, 41 and 43 are fixed by means of screws 45a, 45b and 45c passing through corresponding holes provided in each of them, and screwed into likewise corresponding holes made in the head 8 of the filter. Further, the three pieces 40, 41 and 43 are provided with holes 36,37 and 38 for the passage of the fuel. The supply of current to the heating plate 40 is effected by a contact 45 connected through a terminal 44 to a conductor 46 which in turn is connected to the positive pole of the battery of the motor vehicle. The contact 45 passes through a hole 42 of the insulating plate 43 and the terminal 44 is arranged in an aperture 48 made in the head 8 and sealed by an insulating resin 49. Further, the head 8 is connected to ground through the conductor 50 and is in electrical connection with the assembly constituted by the heating plate 40 and the support plate 41 through the screws 45a, 45b, 45c. The heating plate 40 preferably is a resistor with a positive coefficient of resistance (PTC) and is made of an appropriate polymer material such as that marketed by Raychem SpA. Such a material has self-adjusting properties, i.e. it emits the more heat the lower the temperature is, a fact which permits to avoid the use of complex electronic temperature control and adjustment systems. However, it is contemplated to use a temperature sensor to be inserted in the end 52 of the gas oil inlet duct 30 to interrupt the feed circuit of the heater whenever the temperature of the incoming fuel is already sufficiently high, as will normally be the case in the summer season.

Fig. 4 shows a variation in the embodiment of the filter cartridge 12 in which the base plate 14 is provided with a bypass hole 52 which is normally closed by a valve 53 gauged to open only when the pressure upstream of the filter reaches a predetermined threshold because of clogging of the filter element. The valve 53 is constituted by a shutter disk 55 biased to close the hole 52 by a spring 56 bearing against a structure 57 projecting from the base 14 of the filter cartridge.

The operation of the prefilter described above is as follows:

The fuel enters the head 8 from the duct 30, as indicated by the arrows A in Figs. 1 and 3, due to the sucking effect produced by the feed pump arranged downstream and not shown. In the embodiment in which the head is provided with a heating device, the fuel passes through the insulating plate 43 from the hole 36 (Fig. 3) and flows over the entire upper surface of the PTC polymer heater, traversing it through the hole 37. Due to the cup-shaped configuration of the plate 41, the fuel will continue to flow over the heater also along its lower surface until it leaves the heating device from the hole 38 in the plate 41. Below, the fuel that by now has been heated is collected in the chamber 42 and therefrom enters the bowl 1 through the holes 10 in the cover. As the fuel meets the conical surface of the baffle 18, it is conducted towards the cylindrical surface of the filter cartridge; further, the separation of the suspended particles collecting in the decantation chamber 21 is facilitated. Also in this chamber the separation of the water from the organic phase is obtained by decantation. The fuel then passes radially through the filter element 12 and leaves the filter through the axial holes, as indicated by the arrows B. After reaching the head 8, the fuel is sucked in by the feed pump either through the vertical hole 31 or through the horizontal hole 31a (Fig. 3), one of which is closed depending upon the positioning of the feed line and of the available space.

The water and the particles that have been decanted in the chamber 21 are discharged through the hole 23. A system for indicating the water level in the chamber may be provided as is known in the art.

## Claims

1. Prefilter for Diesel engine fuel, comprising a bowl (1) closed by a cover (2) in which fuel inlet holes (1Ø) and fuel outlet holes (9) and sealing means (6) are provided for fixing the bowl to a head (8) arranged upstream of a fuel filter in the feed Line of a Diesel engine, said bowl (1) being further provided with a drain hole (23) with a removable plug (24), said bowl (1) containing a filter cartridge in the form of a cylindrical crown (12), between said cartridge (12) and the bottom of the bowl (1) there being defined a fuel decantation chamber (21), wherein above said filter cartridge (12) a conical baffle (18) is arranged for deflecting the flow of incoming fuel, and in said fuel decantation chamber (21) an elastic support means (2Ø) is arranged for the assembly constituted by said filter cartridge (12) and said baffle (18), said baffle (18) being urged against said cover (2) of the bowl (1) in the portion between said fuel inlet holes (1Ø) and fuel outlet holes (9), characterized in that the baffle (18) covers the filter cartridge without surrounding it and in that said head (8) contains an electric heating device comprising a PTC polymer resistor in the forms of a flat circular plate (4Ø), a cup-shaped supporting element (41), also of conductive material, and an insulating element (43) in contact with said head (8), providing a first fuel circulation chamber between said insulating element (43) and the upper side of said resistor (4Ø) and a second fuel circulation chamber between said cup-shaped element (41) and the lower side of said resistor (4Ø), said electric heating device being mechanically and electrically connected to said head (8) by screws (45a, 45b, 45c), said insulating element (43) and said polymer resistor (4Ø) and said cup-shaped supporting element (41) being provided with diametrically opposed fuel passage holes (36, 37, 38), said screws (45a, 45b, 45c) being used to provide electrical connection between the heating plate and the ground via said head (8), whereas the supply of current to the plate is effected by a contact (45).

2. Prefilter according to claim 1, characterized in that said insulating element (43) is provided with a collar (47) in which there are inserted said polymer resistor (4Ø) and said cup-shaped supporting element (41) which is in electrical insulation relative to the head (8), and in that said insulating element (43) is provided with a hole (42) in which an electric contact (45) is inserted for feeding the polymer resistor (4Ø).

3. Prefilter according to claim 1, characterized in that said filter cartridge (12) is provided with a bypass hole (52) closed by a valve (53) gauged to open at a pressure exceeding the normal pressure of operation.

## Patentansprüche

1. Vorfilter für Dieselkraftstoff, umfassend ein mit einem Deckel (2) verschlossenes Gefäß (1), in dem Kraftstoffeinlaßöffnungen (1Ø) und Kraftstoffauslaßöffnungen (9) und Dichtungsmittel (6) vorgesehen sind, um das Gefäß an einem Kopf (8) zu befestigen, der vor einem Kraftstoffilter in der Zuleitung eines Dieselmotors angeordnet ist, das Gefäß (1) des weiteren mit Ablaßöffnungen (23) mit einem abnehmbaren Verschluß (24) versehen ist, das Gefäß (1) eine Filterkartusche in Form eines Zylinders (12) enthält, zwischen der Kartusche (12) und der Gefäßwand (1) sich eine definierte Kraftstoff-Dekantierkammer (21) befindet, wobei der Filterkartusche (12), ein konischer Ablenkteil (18) zugeordnet ist, um den einströmenden Kraftstoff abzulenken, und in der Kraftstoff-Dekantierkammer (21) ein elastisches Haltemittel (2Ø) angeordnet ist für die durch die Filterkartusche (12) und dem Ablenkteil (18) gebildeten Einheit, der Ablenkteil (18) gegen den Deckel (2) des Gefässes (1) in dem Bereich zwischen den Kraftstoffeinlaßöffnungen (1Ø) und den Kraftstoffauslaßöffnungen (9) gedrückt wird, dadurch gekennzeichnet, daß der Ablenkteil (18) die Filterkartusche bedeckt ohne sie zu umschließen und daß der Kopf (8) eine elektrische Heizvorrichtung enthält, die einen PTC-Polymer-Widerstand in Form einer flachen, kreisförmigen Platte (4Ø), ein ebenfalls aus Leitmaterial bestehendes becherförmiges Halteelement (41), und ein Isolierelement (43) in Kontakt mit dem Kopf (8) umfaßt, eine erste Kraftstoffzirkulationskammer zwischen dem Isolierelement (43) und der Oberseite des Widerstandes (4Ø) und eine zweite Kraftstoffzirkulationskammer zwischen dem becherförmigen Halteelement (41) und der Unterseite des Widerstandes (4Ø) gebildet wird, wobei die elektrische Heizvorrichtung mechanisch und elektrisch durch Schrauben (45a, 45b, 45c) mit dem Kopf (8) verbunden ist, das Isolierelement (43) und der Polymer-Widerstand (4Ø) und das becherförmige Halteelement (41) mit diametral gegenüberliegenden Kraftstoffdurchlaßöffnungen (36, 37, 38) versehen sind, die Schrauben (45a, 45b, 45c) dazu verwendet werden, eine elektrische Verbindung über den Kopf (8) zwischen der Heizplatte und der Erde herzustellen, wohingegen die Stromversorgung zur Platte über einen Kontakt (45) erfolgt.

2. Vorfilter nach Anspruch 1, dadurch gekennzeichnet, daß das Isolierelement (43) mit einem Ring (47) versehen ist, in dem der Polymer-Widerstand (4Ø) und das becherförmige Halteelement (41), das in bezug auf den Kopf (8) elektrisch isoliert ist, eingesetzt sind, und dadurch daß das Isolierelement (43) mit einer Öffnung (42) versehen ist, in der ein elektrischer Kontakt (45) eingefügt ist, um den Polymer-Widerstand (4Ø) zu versorgen.

3. Vorfilter nach Anspruch 1, dadurch gekennzeichnet, daß die Filterkartusche (12) mit einer durch ein Ventil (53) verschlossenen Bypass-Öffnung (52) versehen ist, das so eingestellt ist, daß es sich öffnet, wenn der normale Betriebsdruck überschritten wird.

## Revendications

1. Préfiltre pour carburant pour moteur Diesel, comportant un récipient (1) fermé par un couvercle (2) dans lequel des trous d'admission de carburant (1Ø) et des trous de sortie de carburant (9) et des moyens d'étanchéité (6) sont prévus pour fixer le récipient à une tête (8) disposée en amont d'un filtre de carburant dans la canalisation d'alimentation d'un moteur Diesel, ledit récipient (1) étant en outre muni d'un trou de vidange (23) avec un bouchon amovible (24), ledit récipient (1) contenant une cartouche de filtre sous la forme d'une couronne cylindrique (12), une chambre de décantation de carburant (21) étant définie entre ladite cartouche (12) et le fond du récipient, dans lequel, au-dessus de ladite cartouche de filtre (12), est disposée une chicane conique (18) pour dévier l'écoulement du carburant arrivant, et dans ladite chambre de décantation de carburant (21) est disposé un élément de support élastique (2Ø) pour l'ensemble constitué par ladite cartouche de filtre (12) et ladite chicane (18), ladite chicane (18) étant poussée contre ledit couvercle (2) du récipient (1) dans la partie entre lesdits trous d'admission de carburant (1Ø) et lesdits trous de sortie de carburant (9), caractérisé en ce que la chicane (18) recouvre la cartouche de filtre sans l'entourer, et en ce que ladite tête (8) contient un dispositif de chauffage électrique comportant une résistance en polymère CTP sous la forme d'une plaque circulaire plane (4Ø), un élément support en forme de cuvette (41), également en matériau conducteur, et un élément isolant (43) en contact avec ladite tête (8), constituant une première chambre de circulation de carburant entre ledit élément isolant (43) et le côté supérieur de ladite résistance (4Ø) et une seconde chambre de circulation de carburant entre ledit élément en forme de cuvette (41) et le côté inférieur de ladite résistance (4Ø), ledit dispositif de chauffage électrique étant mécaniquement et électriquement relié à ladite tête (8) par des vis (45a, 45b, 45c), ledit élément isolant (43) et ladite résistance en polymère (4Ø) ainsi que ledit élément support en forme de cuvette (41) étant munis de trous de passage de carburant diamétralement opposés (36, 37, 38), lesdites vis (45a, 45b, 45c) étant utilisées pour assurer une connexion électrique entre la plaque chauffante et la masse par l'intermédiaire de ladite tête (8), tandis que la délivrance de courant à la plaque est effectuée par un contact (45).

2. Préfiltre selon la revendication 1, caractérisé en ce que ledit élément isolant (43) est muni d'un collier (47) dans lequel sont introduits ladite résistance en polymère (4Ø) et ledit élément support en forme de cuvette (41) qui est électriquement isolé par rapport à la tête (8), et dans lequel ledit élément isolant (43) est muni d'un trou (42) dans lequel un contact électrique (45) est introduit pour alimenter la résistance en polymère (4Ø).

3. Préfiltre selon la revendication 1, caractérisé en ce que ladite cartouche de filtre (12) est munie d'un trou de dérivation (52) fermé par une soupape (53) calibrée pour s'ouvrir à une pression dépassant la pression normale de fonctionnement.

*FIG.1*

FIG.4

FIG.2

FIG. 3